# EUROPÄISCHE PATENTSCHRIFT

(11) **EP 4 105 277 B1**
(45) Veröffentlichungstag und Bekanntmachung des Hinweises auf die Patenterteilung: **03.04.2024**
(21) Anmeldenummer: 22178504.1
(22) Anmeldetag: 10.06.2022
(51) Int. Cl.: C08L 7/00, B60C 1/00, C08L 9/00, C08L 21/00

(54) **KAUTSCHUKMISCHUNG UND REIFEN**
RUBBER COMPOSITION AND TYRES
MÉLANGE DE CAOUTCHOUC ET PNEU

(30) Priorität: 18.06.2021 DE 102021206274
(43) Veröffentlichungstag der Anmeldung: 21.12.2022
(73) Patentinhaber: Continental Reifen Deutschland GmbH, 30175 Hannover (DE)
(72) Erfinder: Müller, Norbert, 30165 Hannover (DE); Pavon Sierra, Viktoria, 30165 Hannover (DE); Sà, Catarina, 30165 Hannover (DE)
(74) Vertreter: Continental Corporation

(56) Entgegenhaltungen:
- EP-A1- 2 700 512
- EP-A1- 2 700 670
- EP-A1- 3 150 402
- WO-A1-2009/147006

## Beschreibung

Die Erfindung betrifft eine schwefelvernetzbare Kautschukmischung, insbesondere für den Laufstreifen von Fahrzeugluftreifen.

Die Erfindung betrifft ferner einen Fahrzeugluftreifen mit einem Laufstreifen, der zumindest zum Teil aus einer solchen, mit Schwefel vulkanisierten Kautschukmischung besteht.

Da die Fahreigenschaften eines Reifens, insbesondere Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. So wurden vielfältige Versuche unternommen, die Eigenschaften des Reifens durch die Variation der Polymerkomponenten, der Füllstoffe und der sonstigen Zuschlagstoffe in der Laufstreifenmischung positiv zu beeinflussen. Dabei muss man berücksichtigen, dass eine Verbesserung in der einen Reifeneigenschaft oft eine Verschlechterung einer anderen Eigenschaft mit sich bringt, so ist beispielsweise eine Verbesserung des Abriebverhaltens üblicherweise mit einer Verschlechterung des Bremsverhaltens auf trockener Fahrbahn verbunden. An Laufstreifenmischungen für PKW- und Van-Reifen werden zum Beispiel höchste Anforderungen hinsichtlich des Nass- und Trockenbremsens, des Abriebwiderstands, des Cut-und-Chip-Verhaltens, des Rollwiderstands, der Haltbarkeit und des Handlings gestellt.

Um Reifeneigenschaften wie Abrieb, Nassrutschverhalten und Rollwiderstand zu beeinflussen, ist es z. B. bekannt, lösungspolymerisierte Styrol-Butadien-Copolymere mit unterschiedlicher Mikrostruktur einzusetzen. Außerdem lassen sich Dienkautschuke modifizieren, indem Endgruppenmodifizierungen, Kopplungen oder Hydrierungen vorgenommen werden. Die verschiedenen Copolymertypen haben unterschiedlichen Einfluss auf die Vulkanisat- und damit auch auf die Reifeneigenschaften.

In der EP 0 302 505 B1 werden rußhaltige Kautschukmischungen für Reifen mit gutem Nassgriff und niedrigem Rollwiderstand beschrieben, die teilweise hydrierte lösungspolymerisierte Styrol-Butadien-Copolymere enthalten.

Aus der EP 0 775 725 B1 ist es bekannt, Kautschukmischungen für Reifen mit gutem Nassgriff, guter Verarbeitbarkeit und geringem Rollwiderstand bereitzustellen, die partiell hydrierte Styrol-Butadien-Copolymere, Kieselsäure und Silan-Kupplungsagenzien enthalten. Die in der EP 0 775 725 B1 offenbarten Styrol-Butadien-Copolymere weisen bei Styrolgehalten von mehr als 37 Gew.-% nur einen Hydrierungsgrad von 25 % auf.

In der EP 2 092 013 B1 werden Kautschukmischungen für Fahrzeugluftreifen mit gutem Nassgriff, geringem Rollwiderstand und guten Wintereigenschaften offenbart, die 30 bis 80 phr zumindest eines teilweise hydrierten lösungspolymerisierten Styrol-Butadien-Copolymers mit einem Hydrierungsgrad von mehr als 30 % aufweist. Konkret werden Styrol-Butadien-Copolymere mit einem Hydrierungsgrad von 35 und 67 % beschrieben.

Kautschukmischungen für Reifen mit hydrierten lösungspolymerisierten Styrol-Butadien-Copolymeren mit einem hohem Hydrierungsgrad von mehr als 80 % sind beispielsweise aus der EP 3 424 750 A1, der EP 3 181 630 A1, der EP 3 181 631 A1 und der EP 3 741 802 A1 bekannt.

Aus der WO 2018033508 A1 ist ferner eine schwefelvernetzbare Kautschukmischung bekannt, die neben einem Kautschukblend aus funktionalisierten Dienelastomeren ein spezielles Vulkanisationssystem aus einem Beschleuniger und elementarem Schwefel und/oder einer schwefelspendenden Substanz enthält, wobei das Molverhältnis von Beschleuniger zu Schwefel 0,18 bis 5 beträgt, wobei die Gesamtmolmenge Schwefel aus elementarem Schwefel und dem von den schwefelspendenden Substanzen abgegebenem Schwefel besteht. Ein derartiges Vulkanisationssystem wird auch als effizientes Vulkanisationssystem bezeichnet. Hierbei ist die molare Menge an Beschleuniger gegenüber der Menge an Schwefel vergleichsweise hoch und es bilden sich bei der Vernetzung überwiegend monosulfidische Schwefelbrücken zwischen den Polymerketten aus. Die Kautschukmischungen gemäß der WO 2018033508 A1 lassen sich gut verarbeiten und führen bei Verwendung in Reifen zu verbesserten Reifeneigenschaften.

Der Erfindung liegt die Aufgabe zugrunde, Kautschukmischungen für die Laufstreifen von Fahrzeugluftreifen bereitzustellen, die sich durch eine verbesserte Reißdehnung auszeichnen.

Gelöst wird diese Aufgabe erfindungsgemäß durch eine schwefelvernetzbare Kautschukmischung, insbesondere für den Laufstreifen von Fahrzeugluftreifen, die
- 20 - 100 phr (Gewichtsteile, bezogen auf 100 Gewichtsteile der gesamten Kautschuke in der Mischung) zumindest eines hydrierten lösungspolymerisierten Styrol-Butadien-Copolymers mit einem Hydrierungsgrad von 80 bis 98 %,
- bis zu 80 phr zumindest eines weiteren Dienkautschuks,
- 40 - 350 phr zumindest eines Füllstoffes und
- ein Vulkanisationssystem, das wenigstens einen Beschleuniger und elementaren Schwefel und wenigstens eine schwefelspendende Substanz enthält, wobei das Molverhältnis von Beschleuniger zu Schwefel 0,4 bis 5 beträgt, wobei die Gesamtmolmenge Schwefel aus elementarem Schwefel und dem von den schwefelspendenden Substanzen abgegebenem Schwefel besteht,
enthält.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Unter Hydrierungsgrad eines Kautschukes ist dabei das Verhältnis der hydrierten Doppelbindungen zu den nicht hydrierten Doppelbindungen zu verstehen. Aromatische Doppelbindungen der Styrolbausteine werden dabei nicht berücksichtigt.

Überraschenderweise wurde gefunden, dass durch den Einsatz eines hydrierten lösungspolymerisierten Styrol-Butadien-Copolymers mit einem sehr hohen Hydrierungsgrad von 80 bis 98 % in Kombination mit dem speziellen Vulkanisationssystem in füllstoffhaltigen Kautschukmischungen eine Mischung erhalten werden kann, die sich durch eine verbesserte Reißdehnung und damit eine verbesserte Produkteigenschaften im Hinblick auf Abrieb und Einreißbeständigkeit auszeichnet.

Die erfindungsgemäße Kautschukmischung bietet zusätzlich den Vorteil, dass sie eine hohe Alterungsbeständigkeit und bei Verwendung als Reifenlaufstreifen einen niedrigen Rollwiderstand aufweist.

Die schwefelvernetzbare Kautschukmischung enthält 20 - 100 phr, vorzugsweise 30 bis 100 phr, zumindest eines teilweise hydrierten lösungspolymerisierten Styrol-Butadien-Copolymers mit einem Hydrierungsgrad von 80 bis 98 %, die nach dem Fachmann bekannten Polymerisations- und Hydrierungsverfahren hergestellt werden können. Es können auch mehrere hydrierte lösungspolymerisierte Styrol-Butadien-Copolymere im Verschnitt eingesetzt werden.

Ein besonders ausgewogenes Verhältnis von Nassgriff und Rollwiderstand bei Verwendung als Reifenlaufstreifen lässt sich erzielen, wenn das hydrierte lösungspolymerisierte Styrol-Butadien-Copolymer einen Hydrierungsgrad von 90 bis 98 % aufweist. Bei diesen Hydrierungsgraden wird ein besonders guter Schutz vor Alterung erzielt.

Für besonders gute Vulkanisat- und Reifeneigenschaften hat es sich als vorteilhaft erwiesen, wenn das hydrierte lösungspolymerisierte Styrol-Butadien-Copolymer eine Styrol-Anteil von 5 bis 40 Gew.-% aufweist.

Die Kautschukmischung enthält bis zu 80 phr zumindest eines weiteren Dienelastomers. Unter Dienelastomeren werden in dieser Schrift hochmolekulare, feste Elastomere (Kautschuke) verstanden. Flüssige Polybutadiene fallen nicht unter diesen Begriff. Als Dienelastomere oder Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Bei den weiteren Dienelastomeren kann es sich z. B. um natürliches Polyisopren und/oder synthetisches Polyisopren und/oder Polybutadien (Butadien-Kautschuk) und/oder nicht oder gering hydriertes Styrol-Butadien-Copolymer (Styrol-Butadien-Kautschuk) und/oder Styrol-Isopren-Kautschuk und/oder Halobutyl-Kautschuk und/oder Polynorbornen und/oder Isopren-Isobutylen-Copolymer und/oder Ethylen-Propylen-Dien-Kautschuk handeln. Die Kautschuke können als reine Kautschuke oder in ölverstreckter Form eingesetzt werden.

Gemäß einer bevorzugten Ausführungsform der Erfindung ist das weitere Dienelastomer ausgewählt aus der Gruppe bestehend aus natürlichem Polyisopren, synthetischem Polyisopren, Polybutadien und weiteren Styrol-Butadien-Copolymeren. Die Kautschuke können im Verschnitt eingesetzt werden. Die synthetisch hergestellten Dienelastomere können zudem mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Das Vulkanisationssystem enthält wenigstens einen Beschleuniger und elementaren Schwefel und wenigstens eine schwefelspendende Substanz, wobei das Molverhältnis von Beschleuniger zu Schwefel (Beschleuniger/Schwefel-Verhältnis) 0,4 bis 5, bevorzugt 0,4 bis 2,5, beträgt. Ein derartiges Vulkanisationssystem wird auch als effizientes Vulkanisationssystem bezeichnet. Hierbei ist die molare Menge an Beschleuniger gegenüber der Menge an Schwefel vergleichsweise hoch und es bilden sich bei der Vernetzung überwiegend monosulfidische Schwefelbrücken zwischen den Polymerketten aus.

Der Beschleuniger ist ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Guanidinbeschleunigern und/oder Xanthogenatbeschleunigern.

Bevorzugt ist die Verwendung wenigstens eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert.Butyl-2-benzothiazylsulfenamid (TBBS). Besonders bevorzugt wird N-Cyclohexyl-2-benzothiazolsufenamid (CBS) eingesetzt.

Auch weitere netzwerkbildende Systeme, wie sie beispielsweise unter den Handelsnamen Vulkuren^{®}, Duralink^{®} oder Perkalink^{®} erhältlich sind, oder netzwerkbildende Systeme, wie sie in der WO 2010/049216 A2 beschrieben sind, können in der Kautschukmischung eingesetzt werden.

Erfindungswesentlich ist es, dass bei der Berechnung des Molverhältnisses von Beschleuniger zu Schwefel in die Gesamtmolmenge Schwefel sowohl der als elementarer Schwefel zugegebene Schwefel als auch der Schwefel aus schwefelspendenden Substanzen eingeht. Der elementare Schwefel, auch als freier Schwefel bezeichnet, wird der Kautschukmischung üblicherweise als Pulver oder Granulat zugegeben.

Schwefelspendende Substanzen, enthaltend Vernetzungsmittel, die Schwefel an das Netzwerk abgeben, sind der fachkundigen Person bekannt oder z. B. in Hofmann & Gupta: Handbuch der Kautschuktechnologie, Gupta-Verlag (2001), Kapitel 7, beschrieben. Schwefelspendende Substanzen werden auch als Schwefeldonoren oder Schwefelspender bezeichnet.

Die schwefelspendende Substanz ist dabei bevorzugt ausgewählt aus der Gruppe enthaltend z.B. Thiuramdisulfide , wie z. B. Tetrabenzylthiuramdisulfid (TBzTD) und/oder Tetramethylthiuramdisulfid (TMTD) und/oder Tetramethylthiurammonosulfid (TMTM) und/oder Tetraethylthiuramdisulfid (TETD), und/oder Thiuramtetrasulfide, wie z.B. Dipentamethylenthiuramtetrasulfid (DPTT), und/oder Dithiophosphate, wie z. B. DipDis (Bis-(Diisopropyl)thiophosphoryldisulfid) und/oder Bis(O,O-2-ethylhexyl-thiophosphoryl)Polysulfid (z. B. Rhenocure SDT 50^{®}, Rheinchemie GmbH) und/oder Zinkdichloryldithiophosphat (z. B. Rhenocure ZDT/S^{®}, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide und/oder 3,3'-Bis(triethoxysilylpropyl)tetrasulfid (TESPT), wobei aus der vorgenannten Gruppe die Thiuramdisulfide als schwefelspendende Substanzen besonders bevorzugt sind. Vorzugsweise wird Tetrabenzylthiuramdisulfid (TBzTD) eingesetzt.

Die schwefelspendende Substanz kann demnach auch ein schwefelspendender Beschleuniger sein. In diesem Fall zählen 1 mol des zugegebenen Beschleunigers in dem Molverhältnis von Beschleuniger zu Schwefel als 1 mol Beschleuniger und x mol Schwefel, wobei x die Molmenge an Schwefelatomen darstellt, die 1 mol des schwefelspendenden Beschleunigers während der Vulkanisation abgeben.

Es ist dem Fachmann bekannt, dass z. B. TBzTD zwei Schwefelatome abgibt, die an der Vulkanisation teilnehmen. Mit TBzTD als schwefelspendendem Beschleuniger ist es in einer schwefelarmen Kautschukmischung (sehr geringe Mengen, < 0,3 phr, an zugesetzten elementarem/freiem Schwefel) oder in einer Kautschukmischung ohne zugesetzten freien Schwefel möglich ein überwiegend monosulfidisches Netzwerk, also ein effizientes Netzwerk bei der Vulkanisation einzustellen.

Wenn die Kautschukmischung ein oder mehrere sulfidische Silane enthält, so gehen nur jene bei der Berechnung des Molverhältnisses von Beschleuniger zu Schwefel in die Gesamtmolmenge Schwefel ein, die Schwefelatome abgeben können. So zählt das disulfidische Silane TESPD (3,3'-Bis(triethoxysilylpropyl)disulfid) im Rahmen der Erfindung nicht als schwefelspendende Substanz, die in die Berechnung des Molverhältnisses von Beschleuniger zu Schwefel eingeht. Das tetrasulfidische Silan TESPT (3,3'-Bis(triethoxysilylpropyl)tetrasulfid) gibt, wie dem Fachmann bekannt, zwei Schwefelatome ab und geht daher in die Berechnung des Molverhältnisses ein.

Um das angestrebte Molverhältnis von Beschleuniger zu Schwefel des effizienten Vulkanisationssystems von 0,4 bis 5 in der erfindungsgemäßen Kautschukmischung zu erhalten, liegt die zugegebene Menge an Beschleuniger zwischen 1,5 und 10 phr und die Menge an elementarem Schwefel zwischen 0,3 und 1 phr, bevorzugt zwischen 0,4 bis 0,9 phr.

Wenn mehr als ein Beschleuniger in der Kautschukmischung enthalten ist, gehen alle zugegebenen Beschleuniger als Beschleuniger in das Molverhältnis von Beschleuniger zu Schwefel ein, und die Summe aller Mengen der zugegebenen Beschleuniger liegt zwischen 2 und 10 phr.

In einer bevorzugten Ausführungsform enthält das Vulkanisationssystem 1,0 bis 7 phr CBS und 1,5 bis 2,5 phr TBzTD und 0,4 bis 0,9 phr elementaren Schwefel.

Die Kautschukmischung enthält 40 bis 350 phr zumindest eines Füllstoffes. Dabei kann es sich um Füllstoffe, wie Ruße, Kieselsäuren, Alumosilicate, Kreide, Stärke, Magnesiumoxid, Titandioxid oder Kautschukgele in üblichen Mengen enthalten, wobei die Füllstoffe in Kombination eingesetzt werden können. Weiterhin sind Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen) denkbar. Auch Graphit und Graphene sowie sogenannte "carbon-silica dual-phase filler" sind als Füllstoff einsetzbar.

Ist in der Kautschukmischung Ruß enthalten, können alle dem Fachmann bekannten Ruß-Typen eingesetzt werden. Bevorzugt wird jedoch ein Ruß eingesetzt, der eine Jodadsorptionszahl gemäß ASTM D 1510 von 30 bis 180 g/kg, bevorzugt 30 bis 130 kg/g, und eine DBP-Zahl gemäß ASTM D 2414 von 80 bis 200 ml/100 g, bevorzugt 100 bis 200 ml/100g, besonders bevorzugt 100 bis 180 ml/100g, aufweist. Hiermit werden für die Anwendung im Fahrzeugreifen besonders gute Rollwiderstandsindikatoren (Rückprallelastizität bei 70 °C) bei guten sonstigen Reifeneigenschaften erzielt.

Zur Reduzierung des Rollwiderstandes hat es sich als vorteilhaft erwiesen, wenn die Kautschukmischung als Füllstoff Kieselsäure enthält.

Es können unterschiedlichste Kieselsäuren, wie "low surface area" oder hoch dispergierbare Kieselsäure, auch im Gemisch, zum Einsatz kommen. Besonders bevorzugt ist es, wenn eine fein verteilte, gefällte Kieselsäure verwendet wird, die eine CTAB-Oberfläche (gemäß ASTM D 3765) von 30 bis 350 m²/g, vorzugsweise von 110 bis 250 m²/g, aufweist. Als Kieselsäuren können sowohl konventionelle Kieselsäuren wie die des Typs VN3 (Handelsname) der Firma Evonik als auch hoch dispergierbare Kieselsäuren, so genannte HD-Kieselsäuren (z. B. Ultrasil 7000 der Firma Evonik), zum Einsatz kommen.

Vorzugsweise enthalt die Kautschukmischung 50 bis 180 phr Kieselsäure, um eine gute Verarbeitbarkeit bei guten Reifeneigenschaften zu erzielen.

Zur Verbesserung der Verarbeitbarkeit und zur Anbindung der Kieselsäure an den Dienkautschuk in kieselsäurehaltigen Mischungen wird vorzugsweise zumindest ein Silan-Kupplungsagens in Mengen von 1 - 15 phf (Gewichtsteile, bezogen auf 100 Gewichtsteile Kieselsäure) in der Kautschukmischung eingesetzt.

Die in dieser Schrift verwendete Angabe phf (parts per hundred parts of filler by weight) ist dabei die in der Kautschukindustrie gebräuchliche Mengenangabe für Kupplungsagenzien für Füllstoffe. Im Rahmen der vorliegenden Anmeldung bezieht sich phf auf die vorhandene Kieselsäure, das heißt, dass andere eventuell vorhandene Füllstoffe wie Ruß nicht in die Berechnung der Menge an Silan-Kupplungsagens mit eingehen.

Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH₂ oder -Sₓ- (mit x = 2-8). So können als Silan-Kupplungsagenzien z. B. 3-Mercaptopropyltriethoxysilan, 3-Thiocyanatopropyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S der Firma Degussa) zugesetzt werden. Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT^{®} in verschiedenen Varianten von der Firma Momentive, USA, oder solche, die unter dem Namen VP Si 363 von der Firma Evonik Industries vertrieben werden. Einsetzbar sind auch sogenannte "silated core polysulfides" (SCP, Polysulfide mit silyliertem Kern), die z. B. in der US 20080161477 A1 und der EP 2 114 961 B1 beschrieben werden.

In der Kautschukmischung können Weichmacher und Harze in Mengen von 1 bis 300 phr, bevorzugt von 5 bis 150 phr, besonders bevorzugt von 15 bis 90 phr, enthalten sein. Als Weichmacher können alle dem Fachmann bekannten Weichmacher wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Rapsöl oder Faktisse oder Weichmacherharze eingesetzt werden. Der oder die Weichmacher werden bei der Herstellung der erfindungsgemäßen Kautschukmischung bevorzugt in wenigstens einer Grundmischstufe zugegeben.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie z. B. N-Phenyl-N'-(1,3-dimethylbutyl)-p-phenylendiamin (6PPD), N,N`-Diphenyl-p-phenylendiamin (DPPD), N,N`-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) oder Zinkkomplexe wie z. B. Zinkethylhexanoat,
c) Wachse,
d) Mastikationshilfsmittel, wie z. B. 2,2'-Dibenzamidodiphenyldisulfid (DBD), und
f) Verarbeitungshilfsmittel, wie z.B. Fettsäuresalze, wie z.B. Zinkseifen, und Fettsäureester und deren Derivate.

Der Mengenanteil der Gesamtmenge an weiteren Zusatzstoffen beträgt 3 bis 150 phr, bevorzugt 3 bis 100 phr und besonders bevorzugt 5 bis 80 phr.

Die Vulkanisation wird in Anwesenheit des Vulkanisationssystems gemäß Anspruch 1 durchgeführt.

Die Herstellung der Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z. B. durch einen Extrusionsvorgang weiterverarbeitet und in die entsprechende Form gebracht. Anschließend erfolgt die Weiterverarbeitung durch Vulkanisation, wobei aufgrund des im Rahmen der vorliegenden Erfindung zugegebenen Vulkanisationssystems eine Schwefelvernetzung stattfindet.

Die Kautschukmischung kann für unterschiedlichste Gummiprodukte eingesetzt werden. Vorzugsweise wird sie für die Herstellung von Fahrzeugluftreifen, wie PKW-, Van-, LKW- oder Zweiradreifen, verwendet, wobei die Kautschukmischung zumindest den mit der Fahrbahn in Berührung kommenden Teil des Laufstreifens bildet.

Bei einem Fahrzeugluftreifen kann der Laufstreifen aus einer einzigen Mischung bestehen, die gemäß der Erfindung ausgebildet ist. Häufig weisen Fahrzeugluftreifen heute jedoch einen Laufstreifen mit einer sogenannten Cap/Base-Konstruktion auf. Unter "Cap" wird dabei der mit der Fahrbahn in Berührung kommende Teil des Laufstreifens verstanden, der radial außen angeordnet ist (Laufstreifenoberteil oder Laufstreifencap). Unter "Base" wird dabei der Teil des Laufstreifens verstanden, der radial innen angeordnet ist, und somit im Fahrbetrieb nicht oder nur am Ende des Reifenlebens mit der Fahrbahn in Berührung kommt (Laufstreifenunterteil oder Laustreifenbase). Bei einem Fahrzeugluftreifen mit einer solchen Cap/Base-Konstruktion ist zumindest die Kautschukmischung für die Cap gemäß dem Anspruch 1 ausgebildet.

Der erfindungsgemäße Fahrzeugluftreifen kann auch einen Laufstreifen aufweisen, der aus verschiedenen nebeneinander und/oder untereinander angeordneten Laufstreifenmischungen besteht (Multikomponentenlaufstreifen).

Bei der Herstellung des Fahrzeugluftreifens wird die Mischung als Fertigmischung vor der Vulkanisation in die Form eines Laufstreifens, bevorzugt wenigstens in die Form einer Laufstreifencap, gebracht und bei der Herstellung des Fahrzeugreifenrohlings wie bekannt aufgebracht. Der Laufstreifen, bevorzugt wenigstens die Laufstreifencap, kann auch in Form eines schmalen Kautschukmischungsstreifens auf einen Reifenrohling aufgewickelt werden.

Von der Erfindung sind sämtliche vorteilhaften Ausgestaltungen, die sich unter anderem in den Patentansprüchen widerspiegeln, umfasst. Insbesondere sind von der Erfindung auch Ausgestaltungen umfasst, die sich durch Kombination unterschiedlicher Merkmale, beispielsweise von Bestandteilen der Kautschukmischung, unterschiedlicher Abstufungen bei der Bevorzugung dieser Merkmale ergeben, sodass auch eine Kombination eines ersten als "bevorzugt" bezeichneten Merkmals oder im Rahmen einer vorteilhaften Ausführungsform beschriebenen Merkmals mit einem weiteren als z. B. "besonders bevorzugt" bezeichneten Merkmal von der Erfindung erfasst ist.

Die Erfindung soll nun anhand von Vergleichs- und Ausführungsbeispielen, die in der Tabelle 1 zusammengefasst sind, näher erläutert werden.

Die Vergleichsmischungen sind dabei mit V, die erfindungsgemäße Mischung ist mit E gekennzeichnet.

Die Mischungsherstellung erfolgte nach den in der Kautschukindustrie üblichen Verfahren unter üblichen Bedingungen in drei Stufen in einem Labormischer bei dem zunächst in der ersten Mischstufe (Grundmischstufe) alle Bestandteile außer dem Vulkanisationssystem (Schwefel und vulkanisationsbeeinflussende Substanzen) vermischt wurden. In der zweiten Mischstufe wurde die Grundmischung nochmals durchmischt. Durch Zugabe des Vulkanisationssystems in der dritten Stufe (Fertigmischstufe) wurde die Fertigmischung erzeugt, wobei bei 90 bis 120 °C gemischt wurde.

Ferner wurden aus sämtlichen Mischungen Prüfkörper durch 20-minütige Vulkanisation unter Druck bei 160 °C hergestellt und mit diesen Prüfkörpern für die Kautschukindustrie typische Materialeigenschaften mit den im Folgenden angegebenen Testverfahren ermittelt:
- Shore-A-Härte bei Raumtemperatur und 70 °C mittels Durometer gemäß DIN ISO 7619-1
- Zugfestigkeit bei Raumtemperatur gemäß DIN 53 504
- Reißdehnung/Bruchdehnung bei Raumtemperatur gemäß DIN 53504
- Spannungswert bei 50 %, 100 % und 200 % Dehnung bei Raumtemperatur gemäß DIN 53 504
- Bruchenergiedichte bei Raumtemperatur bestimmt im Zugversuch gemäß DIN 53 504, wobei die Bruchenergiedichte die bis zum Bruch erforderliche Arbeit, bezogen auf das Volumen der Probe, ist

**Tabelle 1**

| **Bestandteile** | **Einheit** | **1(V)** | **2(V)** | **3(V)** | **4(E)** |
|---|---|---|---|---|---|
| Naturkautschuk | phr | 10 | 10 | 10 | 10 |
| nicht hydrierter SSBR ^{a} | phr | 90 | - | 90 | - |
| hydrierter SSBR ^{b} | phr | - | 90 | - | 90 |
| Ruß | phr | 5 | 5 | 5 | 5 |
| Kieselsäure^{c} | phr | 95 | 95 | 95 | 95 |
| Silan-Kupplungsagens^{d} | phr | 6,8 | 6,8 | 6,8 | 6,8 |
| Weichmacher | phr | 35 | 35 | 35 | 35 |
| Alterungsschutzmittel | phr | 2 | 2 | 2 | 2 |
| Ozonschutzwachs | phr | 2 | 2 | 2 | 2 |
| Zinkoxid | phr | 2,5 | 2,5 | 2,5 | 2,5 |
| Stearinsäure | phr | 2,5 | 2,5 | 2,5 | 2,5 |
| DPG | phr | 2 | 2 | - | - |
| CBS | phr | 2 | 2 | 2,2 | 2,2 |
| TBzTD | phr | - | - | 1,75 | 1,75 |
| Schwefel | phr | 2 | 2 | 0,42 | 0,42 |

| **Eigenschaften** | | | | | |
|---|---|---|---|---|---|
| Shorehärte RT | ShoreA | 70,3 | 79,1 | 71,7 | 76,2 |
| Shorehärte 70 °C | ShoreA | 66,4 | 70,5 | 64,6 | 65,0 |
| Zugfestigkeit bei RT | MPa | 13,7 | 17,0 | 14,1 | 15,5 |
| Reißdehnung bei RT | % | 315 | 472 | 388 | 559 |
| Spannungswert bei 50 % | MPa | 1,6 | 2,3 | 1,6 | 2,0 |
| Spannungswert bei 100 % | MPa | 3,2 | 3,4 | 2,7 | 2,9 |
| Spannungswert bei 200 % | MPa | 8,2 | 6,8 | 6,4 | 5,7 |
| Bruchenergiedichte bei RT | J/cm³ | 16,5 | 34,3 | 21,2 | 40,7 |

| | | | | | |
|---|---|---|---|---|---|
| ^{a} lösungspolymerisiertes Styrol-Butadien-Copolymer, Styrol-Anteil: 38 Gew.-%, Hydrierungsgrad: 0 %, funktionalisiert mit einer Amino-Gruppe und einer Alkoxysilyl-Gruppe, HPR 350, JSR Corporation ^{b} lösungspolymerisiertes Styrol-Butadien-Copolymer, Styrol-Anteil: 34 Gew.-%, Hydrierungsgrad: 95 %, JSR NT120, JSR Corporation ^{c}VN3, Degussa AG, Deutschland, Stickstoff-Oberfläche: 175 m²/g, CTAB-Oberfläche: 160 m²/g ^{d} TESPD, 3,3`-Bis(triethoxysilylpropyl)disulfid | | | | | |

Aus den Daten der Tabelle 1 wird ersichtlich, dass durch die Anwesenheit des hydrierten lösungspolymerisierten Styrol-Butadien-Copolymers mit einem Hydrierungsgrad von 80 bis 98 % und dem speziellen Vulkanisationssystem in füllstoffhaltigen Mischungen überraschenderweise die Reißdehnung erhöht, d. h. verbessert, wird (s. 4(E)). Aus den Einzelmaßnahmen war dies keinesfalls zu erwarten. Die höhere Reißdehung der erfindungsgemäßen Mischung hat zur Folge, dass die Vulkanisate ein bessere Reißbeständigkeit und damit eine bessere Haltbarkeit aufweisen.

## Patentansprüche

1. Schwefelvernetzbare Kautschukmischung, insbesondere für den Laufstreifen von Fahrzeugluftreifen, enthaltend
- 20 - 100 phr (Gewichtsteile, bezogen auf 100 Gewichtsteile der gesamten Kautschuke in der Mischung) zumindest eines hydrierten lösungspolymerisierten Styrol-Butadien-Copolymers mit einem Hydrierungsgrad von 80 bis 98 %,
- bis zu 80 phr zumindest eines weiteren Dienkautschuks,
- 40 - 350 phr zumindest eines Füllstoffes und
- ein Vulkanisationssystem, das wenigstens einen Beschleuniger und elementaren Schwefel und wenigstens eine schwefelspendende Substanz enthält, wobei das Molverhältnis von Beschleuniger zu Schwefel 0,4 bis 5 beträgt, wobei die Gesamtmolmenge Schwefel aus elementarem Schwefel und dem von den schwefelspendenden Substanzen abgegebenem Schwefel besteht.

2. Kautschukmischung nach Anspruch 1, **dadurch gekennzeichnet, dass** das hydrierte lösungspolymerisierte Styrol-Butadien-Copolymer einen Hydrierungsgrad von 90 bis 98 % aufweist.

3. Kautschukmischung nach Anspruch 1 oder 2, **dadurch gekennzeichnet, dass** das hydrierte lösungspolymerisierte Styrol-Butadien-Copolymer einen Styrol-Anteil von 5 bis 40 Gew.-% aufweist.

4. Kautschukmischung nach zumindest einem der vorhergehenden Ansprüche, **dadurch gekennzeichnet, dass** der weitere Dienkautschuk ausgewählt ist aus der Gruppe, bestehend aus natürlichem Polyisopren, synthetischem Polyisopren, Polybutadien und weiteren Styrol-Butadien-Copolymeren.

5. Kautschukmischung nach zumindest einem der vorhergehenden Ansprüche, **dadurch gekennzeichnet, dass** das Molverhältnis von Beschleuniger zu Schwefel 0,4 bis 2,5 beträgt.

6. Kautschukmischung nach zumindest einem der vorhergehenden Ansprüche, **dadurch gekennzeichnet, dass** der Beschleuniger ausgewählt ist aus der Gruppe der Sulfenamidbeschleuniger.

7. Kautschukmischung nach zumindest einem der vorhergehenden Ansprüche, **dadurch gekennzeichnet, dass** die schwefelspendende Substanz ausgewählt ist aus der Gruppe der Thiuramdisulfide.

8. Kautschukmischung nach zumindest einem der vorhergehenden Ansprüche, **dadurch gekennzeichnet, dass** sie als Füllstoff Kieselsäure enthält.

9. Kautschukmischung nach Anspruch 8, **dadurch gekennzeichnet, dass** sie 50 bis 180 phr Kieselsäure enthält.

10. Kautschukmischung nach Anspruch 8 oder 9, **dadurch gekennzeichnet, dass** sie 1 - 15 phf (Gewichtsteile, bezogen auf 100 Gewichtsteile Kieselsäure) zumindest eines Silan-Kupplungsagenzes enthält.

11. Fahrzeugluftreifen mit einem Laufstreifen, dessen zumindest mit der Fahrbahn in Berührung kommender Teil aus einer mit Schwefel vulkanisierten Kautschukmischung nach einem der Ansprüche 1 bis 10 besteht.

## Claims

1. Sulfur-crosslinkable rubber mixture, especially for the tread of pneumatic vehicle tyres, containing
- 20 - 100 phr (parts by weight based on 100 parts by weight of all rubbers in the mixture) of at least one hydrogenated solution-polymerized styrene-butadiene copolymer having a degree of hydrogenation of 80% to 98%
- up to 80 phr of at least one further diene rubber,
- 40 - 350 phr of at least one filler and
- a vulcanization system which contains at least one accelerator and elemental sulfur and at least one sulfur-donating substance, wherein the molar ratio of accelerator to sulfur is 0.4 to 5, wherein the total molar amount of sulfur consists of elemental sulfur and the sulfur donated by the sulfur-donating substances.

2. Rubber mixture according to Claim 1, **characterized in that** the hydrogenated solution-polymerized styrene-butadiene copolymer has a degree of hydrogenation of 90% to 98%.

3. Rubber mixture according to Claim 1 or 2, **characterized in that** the hydrogenated solution-polymerized styrene-butadiene copolymer has a styrene content of 5% to 40% by weight.

4. Rubber mixture according to at least one of the preceding claims, **characterized in that** the further diene rubber is selected from the group consisting of natural polyisoprene, synthetic polyisoprene, polybutadiene and further styrene-butadiene copolymers.

5. Rubber mixture according to at least one of the preceding claims, **characterized in that** the molar ratio of accelerator to sulfur is 0.4 to 2.5.

6. Rubber mixture according to at least one of the preceding claims, **characterized in that** the accelerator is selected from the group of sulfenamide accelerators.

7. Rubber mixture according to at least one of the preceding claims, **characterized in that** the the sulfur-donating substance is selected from the group of thiuram disulfides.

8. Rubber mixture according to at least one of the preceding claims, **characterized in that** it contains silica as filler.

9. Rubber mixture according to Claim 8, **characterized in that** it contains 50 to 180 phr of silica.

10. Rubber mixture according to Claim 8 or 9, **characterized in that** it contains 1 - 15 phf (parts by weight based on 100 parts by weight of silica) of at least one silane coupling agent.

11. Pneumatic vehicle tyre having a tread which at least in its roadway-contacting portion consists of a sulfur-vulcanized rubber mixture according to any of Claims 1 to 10.

## Revendications

1. Mélange de caoutchoucs réticulable au soufre, en particulier pour la bande de roulement de pneumatiques à air de véhicules, contenant
- 20 - 100 phr (parties en poids, par rapport à 100 parties en poids de la totalité des caoutchoucs dans le mélange) d'au moins un copolymère styrène/butadiène polymérisé en solution ayant un degré d'hydrogénation de 80 à 98 %,
- jusqu'à 80 phr d'au moins un autre caoutchouc diène,
- 40 - 350 phr d'au moins une charge et
- un système de vulcanisation qui contient au moins un accélérateur et du soufre élémentaire et au moins une substance libérant du soufre, le rapport molaire d'accélérateur à soufre valant de 0,4 à 5, la quantité molaire totale de soufre consistant en soufre élémentaire et le soufre libéré par les substances libérant du soufre.

2. Mélange de caoutchoucs selon la revendication 1, **caractérisé en ce que** le copolymère styrène/butadiène hydrogéné, polymérisé en solution, présente un degré d'hydrogénation de 90 à 98 %.

3. Mélange de caoutchoucs selon la revendication 1 ou 2, **caractérisé en ce que** le copolymère styrène/butadiène hydrogéné, polymérisé en solution, présente une teneur en styrène de 5 à 40 % en poids.

4. Mélange de caoutchoucs selon au moins l'une des revendications précédentes, **caractérisé en ce que** l'autre caoutchouc diène est choisi dans le groupe constitué par le polyisoprène naturel, le polyisoprène synthétique, le polybutadiène et d'autres copolymères styrène/butadiène.

5. Mélange de caoutchoucs selon au moins l'une des revendications précédentes, **caractérisé en ce que** le rapport molaire d'accélérateur à soufre vaut de 0,4 à 2,5.

6. Mélange de caoutchoucs selon au moins l'une des revendication précédentes, **caractérisé en ce que** l'accélérateur est choisi dans le groupe des accélérateurs sulfénamide.

7. Mélange de caoutchoucs selon au moins l'une des revendication précédentes, **caractérisé en ce que** la substance libérant du soufre est choisie dans le groupe des disulfures de thiurame.

8. Mélange de caoutchoucs selon au moins l'une des revendication précédentes, **caractérisé en ce qu'**il contient de la silice en tant que charge.

9. Mélange de caoutchoucs selon la revendication 8, **caractérisé en ce qu'**il contient 50 à 180 phr de silice.

10. Mélange de caoutchoucs selon la revendication 8 ou 9, **caractérisé en ce qu'**il ceontient 1 - 15 phf (parties en poids, par rapport à 100 parties en poids de silice) d'au moins un agent de couplage de type silane.

11. Pneumatique à air de véhicule, comportant une bande de roulement dont au moins la partie qui entre en contact avec la voie de circulation consiste en un mélange de caoutchoucs vulcanisé au soufre selon l'une quelconque des revendications 1 à 10.
